# EUROPÄISCHE PATENTSCHRIFT

(11) **EP 1 731 363 B1**
(45) Veröffentlichungstag und Bekanntmachung des Hinweises auf die Patenterteilung: **11.06.2008**
(21) Anmeldenummer: 06114980.3
(22) Anmeldetag: 06.06.2006
(51) Int. Cl.: B60Q 1/26

(54) **Warnleuchte für Fahrzeuge**
Warning light for vehicle
Feu de signalisation pour véhicule

(30) Priorität: 10.06.2005 DE 102005026781
(43) Veröffentlichungstag der Anmeldung: 13.12.2006
(73) Patentinhaber: Hella KGaA Hueck & Co., 59552 Lippstadt (DE)
(72) Erfinder: Budde, Oliver, 59597 Erwitte (DE); Treichel, Michael, 33014 Bad Driburg (DE)

(56) Entgegenhaltungen:
- EP-A- 0 546 290
- DE-A1- 19 831 902
- DE-C1- 4 325 901

## Beschreibung

Die Erfindung betrifft eine Warnleuchte für Fahrzeuge mit folgenden Merkmalen:
- eine Lichtquelle ist in ein Gehäuse eingesetzt, welches aus einer lichtdurchlässigen Lichthaube und einem die Lichthaube tragenden Sockel besteht,
- der Sockel ist schalenförmig ausgeführt und aus elastischem Material hergestellt,
- an dem äußeren umlaufenden Rand des schalenförmigen Sockels ist die Lichthaube befestigt,
- mit dem Boden das schalenförmigen Sockels ist zentral ein Trägerelement verbunden, durch welches die Warnleuchte auf eine fahrzeugseitige Aufnahme aufsteckbar ist,
- in dem Gehäuse ist eine Grundplatte angeordnet, welche an dem Sockel festsetzbar ist und eine Motorbefestigung und einen Lagerdom für ein drehbares Reflektorelement aufweist.

Aus der DE 198 31 902 C2 ist eine derartige Warnleuchte bekannt. Die bekannte Warnleuchte für Fahrzeuge besteht aus einem schalenförmigen Sockel und einer an diesem befestigten, lichtdurchlässigen Lichthaube. Der Sockel weist drei in das Gehäuseinnere ragende Haltsäulen auf, die eine in dem Gehäuse angeordnete Grundplatte halten. An dieser Grundplatte ist sowohl der für die Drehung der Reflektoreinheit benötigte Motor befestigt, als auch über ein Lager die drehbare Reflektoreinheit. In einem als Reflektorhalter ausgebildeten flexiblen Rohr ist ein Halter für die Glühlampe angeordnet, die mittels elektrischer Leitungen mit der Spannungsversorgung verbunden ist. Nachteilig an einer derart vorbekannten Warnleuchte für Fahrzeuge ist es, dass eine Vielzahl von von Bauelementen für die Warnleuchte benötigt werden, was einer erheblichen Kostenaufwand sowohl bei der Bauteilherstellung, als auch bei der zwischenzeitlichen Lagerung als auch aufgrund der vielen unterschiedlichen Montageschritte bei der Montage bedeutet.

Aus der DE 43 25 901 C1 ist eine Warnleuchte mit einem Sockel und einer lichtdurchlässigen Lichthaube bekannt. Der Sockel weist an einem oberen Ende einen ebenen Boden auf, der im zentralen Bereich eine Ausnehmung aufweist zur Aufnahme einer Lichtquellenanordnung. Der Sockel ist über einen ringförmigen Rastvorsprung lösbar mit der Lichthaube verbunden.

Aufgabe der Erfindung ist es, eine Warnleuchte für Fahrzeuge gemäß dem Oberbegriff des Anspruchs 1 derart auszubilden, dass die Anzahl der benötigten Bauteile verringert wird und somit die Herstellkosten reduziert werden.

Zur Lösung der Aufgabe weist die Erfindung die Merkmale des Anspruchs 1 auf.

Bei einer vorteilhaften Ausgestaltung der Erfindung weist die Grundplatte an ihrem radialen Umfang zumindest einen angeformten Steg auf, welcher eine entsprechende Nut in dem Sockel durchsetzt und welcher im montierten Zustand in einen Hinterschnitt der Lichthaube eingreift und diese somit klemmend befestigt. Dadurch, dass der zumindest eine Steg eine Nut des Sockels durchsetzt, ist eine sicherer und dauerhafte Befestigung der beiden Bauteile zueinander gewährleistet. Zusätzlich wird der Randbereich des aus einem elastischen Material hergestellten Sockels durch die Grundplatte gegen Verformung gestützt. Der zumindest eine Steg bietet den weiteren Vorteil, dass die Lichthaube mittels einer einfachen Rast- oder bajonettartigen Schraubmontage dauerhaft fest mit dem Sockel der Warnleuchte verbunden werden kann, ohne dass zusätzliche Montageschritte oder zusätzliche Schrauben etc. benötigt werden.

Nach einer Ausführungsform der Erfindung weist die Grundplatte zumindest drei angeformte Stege auf, die an dem radialen Umfang der Grundplatte gleichmäßig verteilt angeordnet sind. Dies bietet den Vorteil, dass die auf die Lichthaube, die Grundplatte und den Sockel wirkenden Montage- und Haltekräfte gleichmäßig verteilt sind.

Um eine konstruktiv möglichst einfache elektrische Masseverbindung für die Lichtquelle und/oder den Motor zu realisieren, besteht die Grundplatte bei einer vorteilhaften Ausgestaltung der Erfindung aus einem metallischen Werkstoff, so dass der Masseanschluss der Lichtquelle und/oder des Motors entweder direkt oder mittels einer einfachen Verbindungsleitung mit der Grundplatte verbindbar ist.

Eine vorteilhafte Ausgestaltung der Erfindung ist in den Figuren dargestellt. Es zeigen
Figur 1: eine perspektivische Explosionsdarstellung einer Warnleuchte,
Figur 2: eine Vertikalschnittdarstellung durch die Warnleuchte,
Figur 3: eine vergrößerte Darstellung der Einzelheit Z aus Figur 2 und
Figur 4: eine vergrößerte perspektivische Darstellung der Grundplatte.

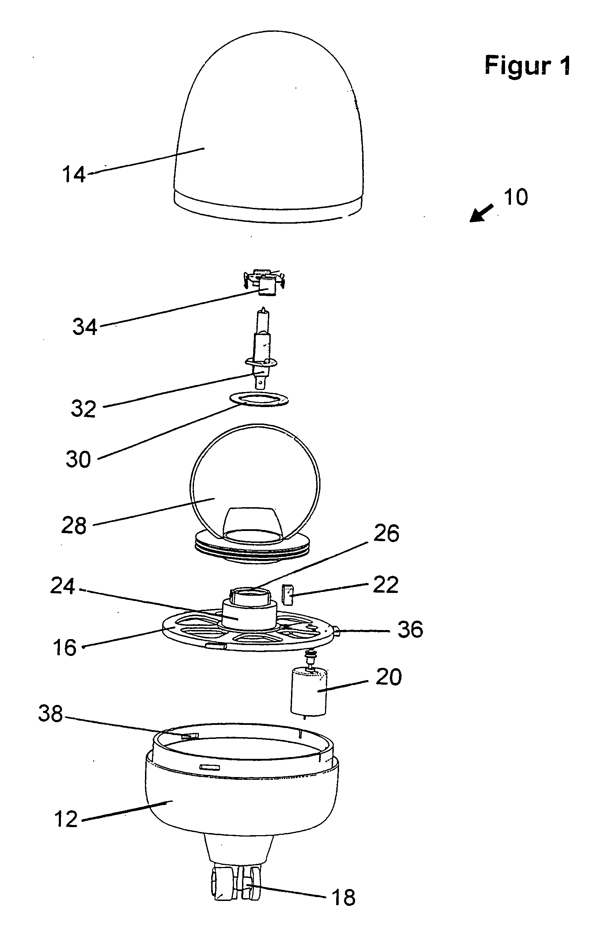

Figur 1 zeigt in einer Explosionsdarstellung einer erfindungsgemäße Warnleuchte (10). Um eine gewisse Flexibilität der Warnleuchte (10) zu gewährleisten, was insbesondere vor Zerstörung bei leichter Berührung mit Ästen etc. schützen soll, ist der Sockel (12) der Warnleuchte (10) aus einem elastischem Material wie z.B. Gummi hergestellt. Die Warnleuchte (10) ist mittels eines mit dem Sockel (12) verbundenen Trägerelementes (18) mit einem nicht dargestellten fahrzeugseitigen Rohr verbindbar. Der weitere Aufbau der Warnleuchte (10) lässt sich am einfachsten anhand der Montageschritte erläutern. Der Motor (20) wird von Unterseite her mittels zweier Schrauben mit der metallischen Grundplatte (16) verbunden, wobei die Antriebswelle des Motors durch eine Bohrung der Grundplatte (16) zur ihrer Oberseite hindurchragt. Ein Steckverteiler (22) wird von der Oberseite der Grundplatte (16) durch diese hindurchgeschoben und ebenfalls mittels einer Schraube an der Grundplatte (16) befestigt. An den Steckverteiler (22) wird eine nicht dargestellte fahrzeugseitige Masseleitung, sowie eine ebenfalls nicht dargestellte Masseleitung des Motors (20) angeschlossen. Die Spannungsversorgung sowohl des Motors (20) als auch der Lichtquelle (32) erfolgt ebenfalls über nicht dargestellte Leitungen. Nun wird die Grundplatte (16) mittels dreier Stege (36) in entsprechende Nuten (38) des Sockels (12) eingeknüpft, so dass der radiale Rand der Grundplatte (16) den radialen oberen Rand des Sockels (12) stützt. Auf den einstückig an der Grundplatte (16) angeformten Lagerdom (24) wird der Reflektor (28) gesetzt. Die Antriebswelle des Motors (20) wird mittels nicht dargestellter Antriebsriemen mit dem einstückig mit dem Reflektor (28) ausgebildeten Antriebsrad verbunden. Um den Reflektor (28) auf dem Lagerdom (24) zu halten, wird eine Scheibe (30) aufgesetzt. In die zentral in der Grundplatte (16) angeordnete Lichtquellenaufnahme (26) wird die Lichtquelle (32) eingesetzt und mittels einer Haltefeder (34) befestigt, wobei die Haltefeder (34) rastend an der Grundplatte festgesetzt wird. Die Haltefeder (34) dient zur Befestigung der Lichtquelle (32), als auch zur Fixierung der Scheibe (30), um den Reflektor (28) auf dem Lagerdom (24) zu halten. Zuletzt wird die Lichthaube (14) auf den Sockel (12) aufgesetzt und bajonettartig festgeschraubt.

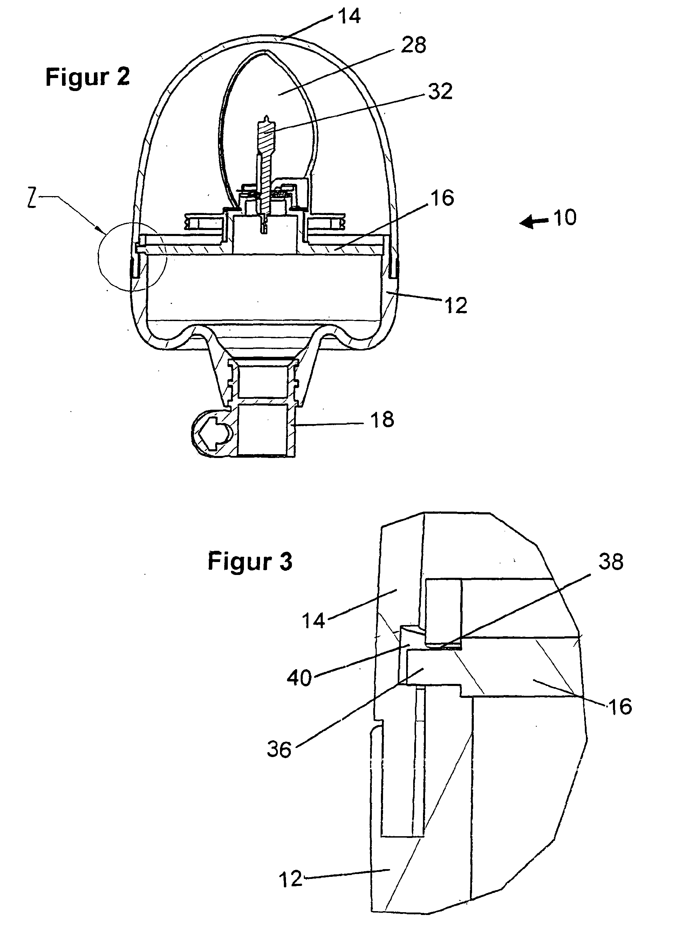

Figur 2 zeigt eine Vertikalschnittdarstellung der montierten Warnleuchte (10). In den aus elastischem Material hergestellten Sockel (12) ist das Trägerelement (18) zur fahrzeugseitigen Montage eingesetzt. An seinem oberen Rand ist die Grundplatte (16) in den Sockel (12) eingeknöpft, die die Lichtquelle (32) und den Reflektor (28) trägt. Die Lichthaube (14) ist bajonettartig mit dem Sockel (12) bzw. der Grundplatte (16) verbunden. Die weiteren Bauelemente sind in der Beschreibung zu Figur 1 bereits erläutert worden, so dass hier darauf verzichtet wird.
In Figur 3 ist in einer vergrößerten Darstellung der Einzelheit Z aus Figur 2 die Lichthaubenbefestigung genauer gezeigt. Ein Steg (36) der Grundplatte (16) taucht durch die Nut (38) des Sockels (12) hindurch. Durch eine Drehbewegung der Lichthaube (14) wird ein in der Lichthaube (14) eingeformter Hinterschnitt (40) klemmend mit dem Steg (36) verbunden, so dass ein dauerhafter Festsitzt gewährleistet ist. Die Stege (36), Nuten (38) und Hinterschnitte (40) sind vorteilhaft schräg und in ihren Abmessungen so aufeinander abgestimmt, dass eine bajonettartige Verbindung mit einer möglichst großflächigen Anlage zwischen Lichthaube (14) und Steg (36) erreichbar ist.

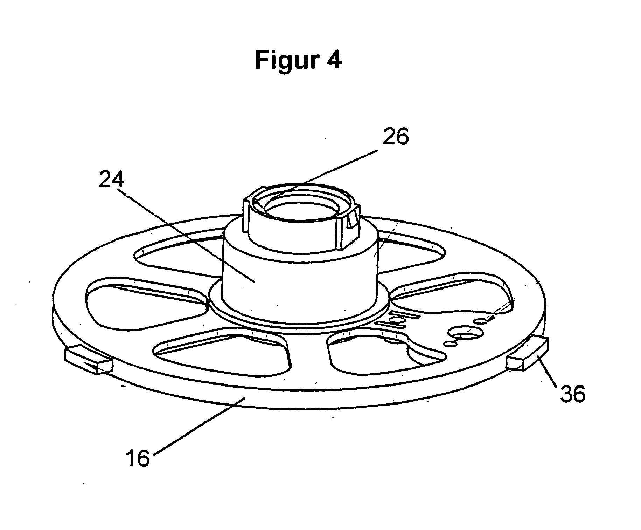

Figur 4 zeigt eine vergrößerte perspektivische Darstellung der Grundplatte (16) mit den daran angeformten Stegen (36). Zentral ist der Lagerdom (24) angeordnet, der sich verjüngt fortsetzt und die Lichtquellenaufnahme (26) bildet. An die Grundplatte (16) sind Rastelemente für die hier nicht dargestellte Haltefeder angeformt.

### Bezugszeichenliste:

- 10: Warnleuchte
- 12: Sockel
- 14: Lichthaube
- 16: Grundplatte
- 18: Trägerelement
- 20: Motor
- 22: Steckverteiler
- 24: Lagerdom
- 26: Lichtquellenaufnahme
- 28: Reflektor
- 30: Scheibe
- 32: Lichtquelle
- 34: Haltefeder
- 36: Steg
- 38: Nut
- 40: Hinterschnitt

## Patentansprüche

1. Warnleuchte (10) für Fahrzeuge mit folgenden Merkmalen:
- eine Lichtquelle (32) ist in ein Gehäuse eingesetzt welches aus einer lichtdurchlässigen Lichthaube (14) und einem die Lichthaube (14) tragenden Sockel (12) besteht,
- der Sockel (12) ist schalenförmig ausgeführt und aus elastischem Material hergestellt,
- an dem äußeren umlaufenden Rand des schalenförmigen Sockels (12) ist die Lichthaube (14) befestigt,
- mit dem Boden das schalenförmigen Sockels (14) ist zentral ein Trägerelement (18) verbunden, durch welches die Warnleuchte (10) auf eine fahrzeugseitige Aufnahme aufsteckbar ist,
- in dem Gehäuse ist eine Grundplatte (16) angeordnet, welche an dem Sockel (12) festsetzbar ist und eine Motorbefestigung und einen Lagerdom (24) für ein drehbares Reflektorelement (28) aufweist,
**dadurch gekennzeichnet,**
**dass** die Grundplatte (16) eine Lichtquellenaufnahme (26) und zumindest ein elektrisches Kontaktelement für die Lichtquelle (32) aufweist,
und **dass** die Grundplatte (16) zur Fixierung der Lichthaube (14) an ihrem radialen Umfang zumindest einen angeformten Steg (36) aufweist, welcher eine entsprechende Nut (38) des Sockels (12) durchsetzt und welcher im montierten Zustand in einen Hinterschnitt (40) der Lichthaube (14) eingreift und diese somit klemmend befestigt.

2. Warnleuchte (10) für Fahrzeuge nach Anspruch 1, **dadurch gekennzeichnet, dass** die Grundplatte (16) zumindest drei angeformte Stege (36) aufweist, die an dem radialen Umfang der Grundplatte (16) gleichmäßig verteilt angeordnet sind.

3. Warnleuchte (10) nach einem der vorstehenden Ansprüche, **dadurch gekennzeichnet, dass** die Grundplatte (16) aus einem metallischen Werkstoff besteht und als elektrische Masseverbindung für die Lichtquelle (32) und/oder für den Motor (20) dient.

## Claims

1. Rotating beacon (10) for motor vehicles **characterized** as follows:
- a light source (32) is mounted into a housing which comprises of a transparent dome (14) and a base (12) carrying the dome (14),
- the base (12) is the shape of a dish and made of an elastic material,
- the dome (14) is fastened to the outer circumferential edge of the dish-shaped base (12),
- a carrier element (18) is connected to the center of the bottom of the dish-shaped base (14) enabling the rotating beacon (10) to be placed onto a mating element located on the vehicle,
- a baseplate (16) inside the housing can be fastened on the base (12) and carries a bracket for a drive and a domed rest (24) for a rotating reflector element (28),
**characterized in that**
the baseplate (16) comprises a holder of a light source (26) and at least one electric contact device for the light source (32) and that an edge (36) is molded to the radial circumference of the baseplate (16) which is used to hold the dome (14) in place by slipping into a corresponding groove (38) of the base (12) such that said edge (36) snaps into an undercut (40) of the dome (14) to hold the dome (14) when the unit is fully assembled.

2. Rotating beacon (10) for motor vehicles of claim 1, **characterized in that** the baseplate (16) comprises at least three molded-on edges (36) which are evenly distributed along the radial circumference of the baseplate (16).

3. Rotating beacon (10) of one of the above claims, **characterized in that** the baseplate (16) is made of a metal material to act as the electric chassis ground of the light source (32) and/or the drive (20).

## Revendications

1. Feu de signalisation (10) pour véhicules avec les caractéristiques suivantes :
- une source lumineuse (32) est insérée dans un boîtier qui est composé d'un cabochon (14) transparent et d'un socle (12) supportant le cabochon (14),
- le socle (12) est réalisé en forme de coquille et est constitué en un matériau élastique,
- le cabochon (14) es fixé au bord périphérique extérieur du socle en forme de coquille (12),
- un élément porteur (18) est rattaché au fond du socle en forme de coquille (12), cet élément permettant de monter le feu de signalisation (10) sur un logement côté véhicule,
- dans le boîtier est disposée une plaque de base (16) qui peut être fixée au socle (12) et présente une fixation moteur et un dôme d'appui (24) pour un élément réflecteur rotatif (28),
**caractérisé en ce que**
la plaque de base (16) présente un logement de source lumineuse (26) et au moins un élément de contact électrique pour la source lumineuse (32),
et la plaque de base (16) présente, pour la fixation du cabochon (14), au moins une barrette moulée (36) sur son pourtour radial, laquelle barrette est introduite dans une rainure correspondante (38) du socle (12) et qui, à l'étant monté, s'engage dans une contre-dépouille (40) du cabochon (14) et fixe ainsi celui-ci par serrage.

2. Feu de signalisation (10) pour véhicules selon la revendication 1, **caractérisé en ce que** la plaque de base (16) présente au moins trois barrettes moulées (36) qui sont réparties de façon régulière sur le pourtour radial de la plaque de base (16).

3. Feu de signalisation (10) selon l'une des revendications précédentes, **caractérisé en ce que** la plaque de base (16) est constituée d'un matériau métallique et sert de mise à la masse électrique pour la source lumineuse (32) et/ou pour le moteur (20).
